Europäisches Patentamt

European Patent Office

Office européen des brevets

(11) Numéro de publication: **0 419 310 A1**

# (12) DEMANDE DE BREVET EUROPEEN

(21) Numéro de dépôt: 90402419.7

(22) Date de dépôt: 03.09.90

(51) Int. Cl.5: **H02G 1/04**

(30) Priorité: 05.09.89 FR 8911572

(43) Date de publication de la demande:
27.03.91 Bulletin 91/13

(84) Etats contractants désignés:
AT BE CH DE DK ES FR GB GR IT LI LU NL SE

(71) Demandeur: ELECTRICITE DE FRANCE
Service National
2, rue Louis Murat

F-75008 Paris(FR)

(72) Inventeur: Feuvrier, Louis François
Les Pierres du Bourg, Nozieres
F-18200 Saint-Amand(FR)

(74) Mandataire: Martin, Jean-Jacques et al
Cabinet REGIMBEAU 26, Avenue Kléber
F-75116 Paris(FR)

(54) Dispositif de manutention pour la pose de câbles électriques par hélicoptère.

(57) Ce dispositif (100), qui permet de faire passer un câble au travers d'un passage d'une structure support délimitée par un contour fermé, comprend :
- un châssis (110), suspendu sous l'hélicoptère, comportant des moyens (112-117) de centrage et de soutien du dispositif sur la structure support,
- supportés par ce châssis, deux guides rectilignes alignés (124, 124'), placés à distance l'un de l'autre de part et d'autre de la structure support et orientés de manière que leur axe commun traverse le passage de cette structure support,
- un coulisseau (130) mobile en translation dans les guides rectilignes, de longueur supérieure à l'intervalle entre ceux-ci et pourvu de moyens (132) pour y fixer l'extrémité du câble
- des moyens moteurs (125, 125') pour déplacer le coulisseau complétement d'un guide (124) vers l'autre (124') et le reprendre dans cet autre guide, en entraînant simultanément le fil dans l'intervalle entre les guides de manière à lui faire traverser le passage.

FIG.2

Xerox Copy Centre

La présente invention concerne un dispositif de manutention pour la pose de câbles électriques par hélicoptère.

Ce mode de pose des câbles électriques, bien que particulièrement efficace et rapide, se heurte actuellement au problème du déroulage des câbles au travers des passages des structures supports qui sont délimités par un contour fermé.

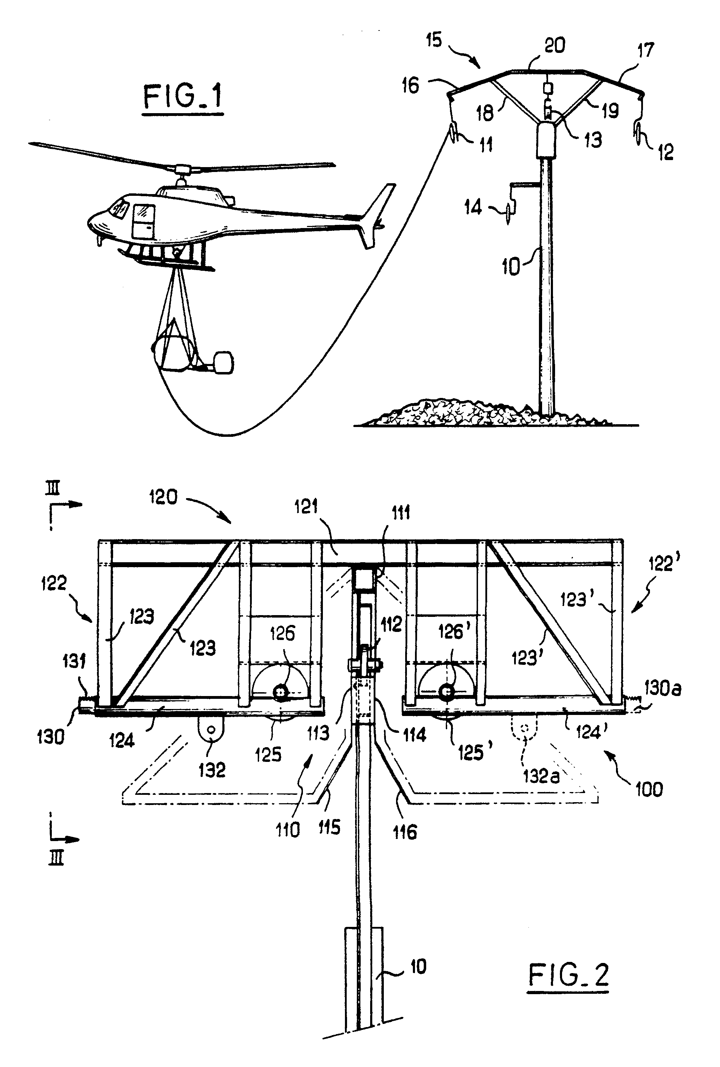

La figure 1 illustre un exemple typique de ce problème.

Le pylône est constitué d'un mat 10 supportant les poulies 11, 12, 13, 14 de soutien des câbles électriques. Dans l'exemple illustré, les poulies 11 à 13 correspondant aux trois phases sont suspendues à une structure support 15 formée de deux bras 16, 17 à l'extrémité desquels sont accrochées les poulies 11 et 12, ces bras étant étayés par des poutres obliques 18 et 19 réunies à leur sommet par une poutre transversale horizontale 20.

Comme on le voit d'après cette illustration, il sera aisé de déposer par hélicoptère les câbles sur les poulies 11, 12 et 14, mais la mise en place de la phase centrale se heurtera au fait que, pour déposer le câble sur la poulie centrale 13, il faut le faire passer au travers du contour fermé délimité par les poutres 18, 19 et 20.

A cet effet, on doit procéder pour cette phase centrale au déroulage à l'extérieur de la structure support, puis on démonte partiellement celle-ci pour introduire manuellement le câble dans le passage et le déposer sur la poulie 13.

Cette manipulation, outre les problèmes de sécurité qu'elle implique, ralentit considérablement la cadence de pose des câbles par hélicoptère, puisqu'il faudra une intervention manuelle à chaque pylône.

Le but de l'invention est de résoudre cette difficulté, en proposant un dispositif de manutention permettant de faire passer un câble au travers d'un passage d'une structure support délimité par un contour fermé.

L'invention s'applique de façon générale chaque fois que l'on rencontre ce problème, le cas illustré figure 1 n'étant donné qu'à titre d'exemple.

Par ailleurs, on assimilera à des passages délimités par un contour fermé (tel le passage délimité par les poutres 18, 19 et 20 de la figure 1) les passages qui, sans être totalement fermés, présentent une ouverture placée en un endroit tel qu'il ne soit pas possible d'y faire passer le câble directement depuis l'hélicoptère.

Le dispositif de l'invention a pour objet de permettre de faire passer le câble automatiquement et sans intervention humaine au travers du contour fermé. Comme on le verra, l'appareil est manipulé et commandé depuis la cabine de l'hélicoptère.

Plus précisément, le dispositif de l'invention, pour permettre de faire passer un câble au travers d'un passage d'une structure support délimité par un contour fermé, comprend :

- un châssis, susceptible d'être suspendu sous l'hélicoptère, comportant des moyens de centrage et de soutien du dispositif sur la structure support,

- supportés par ce châssis, deux guides rectilignes alignés, placés à distance l'un de l'autre de part et d'autre de la structure support et orientés de manière que leur axe commun traverse le passage de cette structure support,

- un coulisseau mobile en translation dans les guides rectilignes, de longueur supérieure à l'intervalle entre ceux-ci et pourvu de moyens pour y fixer l'extrémité du câble

- des moyens moteurs pour déplacer le coulisseau complètement d'un guide vers l'autre et le reprendre dans cet autre guide, en entraînant simultanément le fil dans l'intervalle entre les guides de manière à lui faire traverser le passage.

On va maintenant donner une description détaillée d'un exemple de dispositif, en référence aux dessins annexés.

La figure 1, précitée, montre une vue générale d'une structure support de ligne électrique.

La figure 2 est une vue latérale en élévation, suivant II-II de la figure 5, du dispositif de manutention de l'invention, posé sur une structure support.

La figure 3 est une vue de bout en élévation de ce dispositif, suivant III-III de la figure 2.

La figure 4 est une vue en coupe du détail repéré IV-IV sur la figure 3.

La figure 5 est une vue de dessus du dispositif de l'invention, prise suivant V-V de la figure 3.

Le dispositif de manutention 100 de l'invention est illustré figure 2, 3 et 5.

Il comporte essentiellement un châssis 110 permettant sa mise en place sur la structure support décrite plus haut à propos de la figure 1 (ou sur toute autre structure support comparable) et un système 120 permettant de guider et déplacer un coulisseau 130 auquel sera accroché le câble à mettre en place (non représenté).

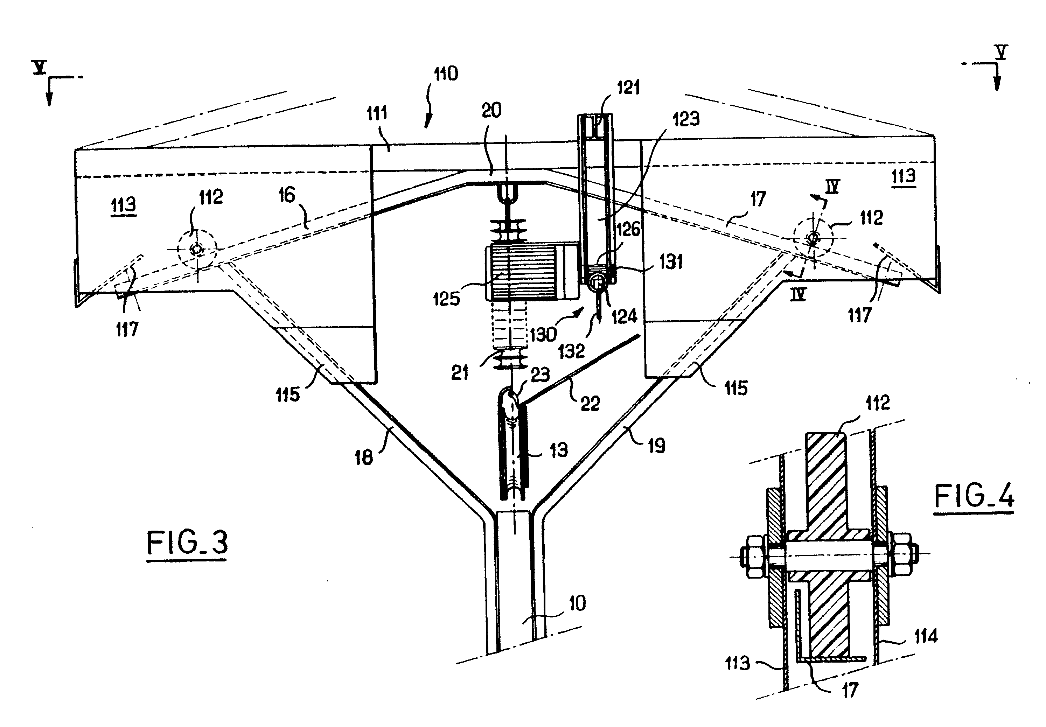

Le châssis 110 comporte essentiellement (voir notamment la figure 3) une poutre 111 venant se poser sur la traverse horizontale 20 de la structure support et portant à chacune de ses extrémités une paire de flasques 113, 114 qui vont venir coiffer les bras latéraux 16 et 17 de la structure support.

Pour soutenir et centrer ce châssis sur la structure support, il est prévu des roulettes porteuses 112 (représentées plus en détail, en coupe, figure 4), qui vont reposer sur le L de la cornière constituant chacun des bras latéraux 16, 17 et assurer ainsi le centrage correct du châssis sur la structure support. Lorsque le châssis est parfaitement centré sur la structure support, la traverse 111 vient reposer sur la poutre supérieure horizontale 20 de la structure support.

Pour faciliter la pose de ce châssis, qui est suspendu sous l'hélicoptère, on prévoit d'évaser en 115, 116 les flasques latéraux pour permettre au plan du châssis de venir coïncider avec celui de la structure support, ainsi que des plaques de guidage d'extrémité 117, 117 pour permettre le centrage transversal.

Le châssis 110, outre les moyens de centrage et de soutien que l'on vient de décrire, supporte également une structure 120 (visible plus particulièrement figure 2) constituée de supports transversaux 122 et 122' symétriques, et situés de part et d'autre de la structure support. Ces ensembles 122, 122' sont suspendus à un longeron 121 perpendiculaire à la traverse 110 du châssis et sont constitués d'un certain nombre de profilés 123, 123' servant à soutenir des guides 124, 124' et des moteurs d'entraînement 125, 125'.

Ces moteurs électriques 125, 125' sont des moteurs électriques asservis dont l'énergie est fournie par le générateur de l'hélicoptère.

Bien entendu, les différents éléments de structure du châssis 110 et des ensembles 120 et 120' sont réalisés en un alliage métallique léger pour que le dispositif soit facilement transportable et manipulable par l'hélicoptère.

Les guides 124, 124' sont formés de deux tubes alignés positionnés de telle sorte que leur axe commun traverse le passage de la structure support délimité par le contour fermé 18, 19, 20 (voir notamment figure 3).

Ces tubes guides présentent en partie inférieure, de part en part, une fente longitudinale et reçoivent un coulisseau 130 pourvu en partie supérieure d'une crémaillère 131 et en partie inférieure d'un anneau d'accrochage du câble 132 dépassant du tube guide par la fente inférieure de celui-ci.

On voit qu'avec cette configuration il est possible de déplacer en translation le coulisseau 130 d'un tube guide vers l'autre en faisant simultanément traverser à l'anneau d'accrochage - et donc au câble attaché à celui-ci - le contour fermé 18, 19, 20.

La translation du coulisseau est réalisée par les deux moteurs asservis 125, 125' dont les axes sont pourvus de pignons 126, 126' venant en prise avec la crémaillère 131 du coulisseau.

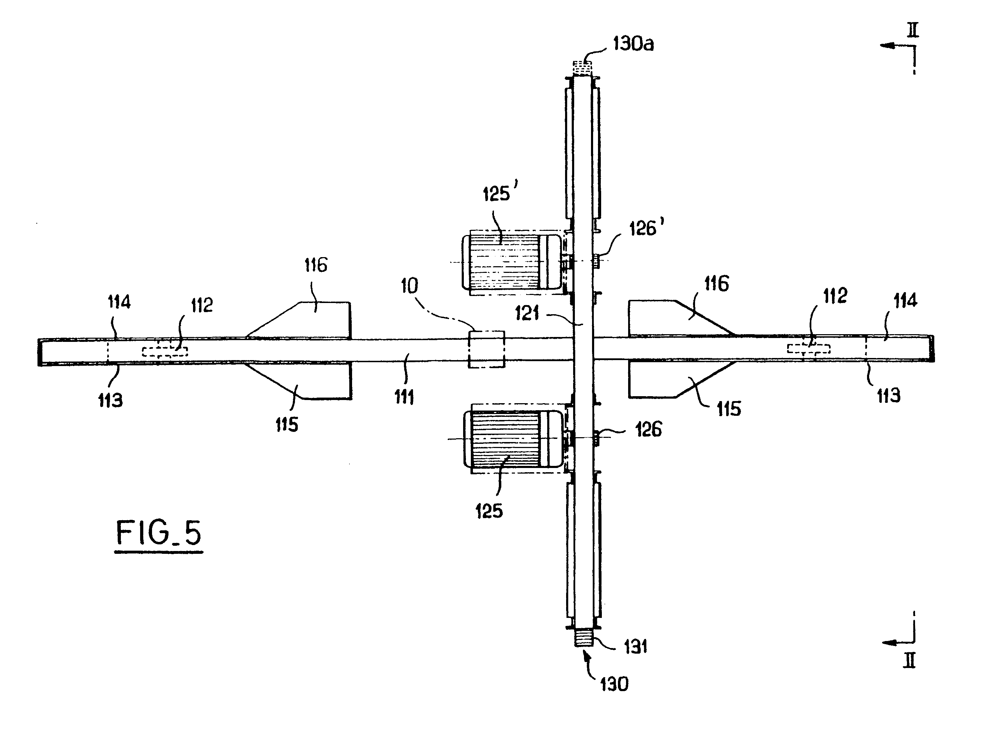

Si l'on prévoit un coulisseau dont la crémaillère a une longueur au moins égale à l'entraxe des deux moteurs 126, 126', on voit que, le coulisseau étant placé initialement dans l'un des guides (par exemple le guide 124, comme illustré sur les figures 2 et 5, où le coulisseau a été représenté en trait plein), il est possible de faire avancer le coulisseau en direction de l'autre guide et au travers du contour fermé par actionnement du moteur 126, puis de reprendre le coulisseau par le moteur 126' jusqu'à arriver en bout de course dans le guide 124' (position illustrée en tiretés sur les figures 2 et 5, et référencée 130a).

On voit ainsi que l'anneau de suspension 132 se sera déplacé en 132a, entraînant avec lui le câble au travers du passage.

Le câble pourra alors venir se loger, par gravité, dans la gorge de la poulie 13 suspendue à l'isolateur 21 (figure 3), guidé par la rampe 22 et retenu sur la poulie par le cliquet 23.

On va maintenant exposer la manière d'utiliser le dispositif de l'invention.

Si l'on suppose, avec les conventions de la figure 2, que l'on veuille faire passer le câble de gauche à droite dans le contour fermé de la structure support, on fait en sorte que le coulisseau se trouve dans le guide de gauche 124 (position illustrée en trait plein sur la figure 2).

Le pilote de l'hélicoptère vient alors coiffer la structure support par le dispositif 100 de l'invention (position illustrée sur les figures 2 à 5).

Il actionne ensuite le moteur 126, ce qui permet au coulisseau de traverser la structure support et de rejoindre le tube guide opposé 124' où le second moteur 126' reprend le mouvement de translation et pousse le coulisseau 130 en fin de course (position illustrée en tiretés figure 2 et référencée 130a).

Le câble, accroché à l'anneau 132 du coulisseau, a ainsi traversé la structure support.

L'hélicoptère peut alors relever le dispositif 100 et continuer son déroulage jusqu'au pylône suivant. Le câble va alors glisser de lui-même dans la gorge de la poulie.

Après que l'hélicoptère ait relevé le dispositif 100 et avant de venir coiffer le pylône suivant, on prendra soin de faire revenir le coulisseau (auquel est toujours accroché le fil) à la position d'origine.

Comme on peut le voir, il n'y a eu aucune intervention humaine ni sur le support ni sur le câble.

**Revendications**

1. Un dispositif (100) de manutention pour la pose de câbles électriques par hélicoptère, permettant de faire passer un câble au travers d'un passage d'une structure support délimité par un contour fermé (18, 19, 20), caractérisé en ce qu'il comprend :

- un châssis (110), susceptible d'être suspendu sous l'hélicoptère, comportant des moyens (112-117) de centrage et de soutien du dispositif sur la structure support,

- supportés par ce châssis, deux guides rectilignes alignés (124, 124'), placés à distance l'un de l'autre de part et d'autre de la structure support et orientés de manière que leur axe commun traverse le passage de cette structure support,

- un coulisseau (130) mobile en translation dans les guides rectilignes, de longueur supérieure à l'intervalle entre ceux-ci et pourvu de moyens (132) pour y fixer l'extrémité du câble

- des moyens moteurs (125, 125') pour déplacer le coulisseau complètement d'un guide (124) vers l'autre (124') et le reprendre dans cet autre guide, en entraînant simultanément le fil dans l'intervalle entre les guides de manière à lui faire traverser le passage.

FIG.1

FIG.2

FIG_3

FIG_4

EP 0 419 310 A1

FIG. 5

EP 0 419 310 A1

**Office européen
des brevets**

**RAPPORT DE RECHERCHE
EUROPEENNE**

Numéro de la demande

**EP 90 40 2419**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 531 714   (BAHR)<br>* colonne 3, ligne 47 - colonne 4, ligne 40; revendication 1; figures 1, 3-3f *<br><br>‑ ‑ ‑ ‑ ‑ | 1 | H 02 G 1/04 |

DOMAINES TECHNIQUES
RECHERCHES (Int. Cl.5)

H 02 G

Le présent rapport de recherche a été établi pour toutes les revendications

| Lieu de la recherche | Date d'achèvement de la recherche | Examinateur |
|---|---|---|
| La Haye | 26 novembre 90 | RIEUTORT A.S. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire
T : théorie ou principe à la base de l'invention

E : document de brevet antérieur, mais publié à la
   date de dépôt ou après cette date
D : cité dans la demande
L : cité pour d'autres raisons
‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑
& : membre de la même famille, document
   correspondant